# EUROPEAN PATENT SPECIFICATION

(11) **EP 1 457 851 B1**
(45) Date of publication and mention of the grant of the patent: **19.11.2008**
(21) Application number: 04004940.5
(22) Date of filing: 03.03.2004
(51) Int. Cl.: G05B 19/401, B23B 29/02

(54) **Digital device for command and control of the translation and rotation of a tool**
Digitale Vorrichtung zur Steuerung und Regelung der Translation und Rotation eines Werkzeugs
Dispositif numérique pour commander et régler la translation et la rotation d'un outil

(30) Priority: 04.03.2003 IT BO20030115
(43) Date of publication of application: 15.09.2004
(73) Proprietor: OBER S.p.A., 40057 Cadriano Di Granarolo (IT)
(72) Inventor: Preti, Giuseppe, 40127 Bologna (IT)
(74) Representative: Dall'Olio, Giancarlo

(56) References cited:
- EP-A- 0 537 124
- US-A- 4 745 557

## Description

The present invention relates to the technical field concerning the apparatuses and operation units for tool operation command and control.

More precisely, the present invention relates to a digital device for command and control of the translation and rotation, in particular, of a drilling tool.

The devices used currently for drilling operations, which require the contemporary translation and rotation of a drilling tool include: a first auxiliary actuator, including a pneumatic or hydraulic motor, which operates means for transmitting motion, with rigidly coupled thereto a second actuator for driving the tool into rotation.

The motion transmission means transform the rotation of the auxiliary actuator in a translation motion for moving forward the power actuator, and thus for moving forward the drilling tool.

Therefore, the movement of the tool during the drilling step is determined by the combination of its forward movement and rotation.

EP 0.537.124 discloses a portable boring machine comprises: a boring spindle rotatably supported and axially movable, a first stationary motor provided for the rotation movement of the boring spindle; a second stationary motor, provided for the axial movement of the boring spindle.

US 4.745.557 discloses a machine tool setting device and control system. The control system allows for the drilling of multi-ply work pieces wherein the multi-plies comprise different thicknesses and hardnesses.

The drill bit translational velocity and rotational velocity are adjusted in accordance with the type of material in the multiply work piece. The data is input by reading bar codes which represent the data associated with the work piece.

In the known devices, the tool translation extension, which is essential for making holes with a precise depth, is controlled only by limit switches, or by sensors detecting the power actuator forward movement, or the stroke of the motion transmission means.

Thus, the auxiliary actuator is stopped, by pneumatic or hydraulic breaking, only when the limit switches are pushed, or at the passage near the sensors, and not immediately; consequently, the drilling depth control is not precise, because of the breaking inertia.

Furthermore, the known devices do not allow to change and adjust the tool rotation speed during drilling, nor to change and adjust the tool translation speed, extension and direction.

However, the possibility to intervene and adjust the drilling tool operation mode is particularly important when the material to be drilled is formed by a series of layers of different materials, having different hardness.

Therefore, the object of the present invention is to propose a digital device for command and control of the translation and rotation of a tool, for example a drilling tool, which is capable of avoiding the drawbacks of the prior art.

In particular, the main object of the present invention is to propose a device for commando of translation and rotation of a drilling tool, which can control and change immediately the speed, the extension and the direction of the tool translation, as well as, independently or together, the tool rotation speed.

Another object of the present invention is to propose a device, which can command and control the translation and rotation of a drilling device, changing instantaneously the speed, the extension and the direction of the tool translation, as well as the tool rotation speed as a function of the hardness of the layer of material to be drilled, and of the composition of the layer, as well as a function of the depth of the hole to be made in the latter.

The above mentioned objects are obtained in accordance with the contents of the claims.

The characteristic features of the present invention will be pointed out in the following description of a preferred embodiment of a digital device for command and control of the translation and rotation of a tool, given as example, with reference to the enclosed drawings, in which:
- Figure 1 is a schematic and top view of the digital device for command and control of a tool translation and rotation, proposed by the present invention, in its characteristic elements;
- Figure 2 is a schematic, lateral view of the device shown in Figure 1.

With reference to the enclosed figures, the reference letter (D) indicates the digital device for command and control of a tool translation and rotation, for example a drilling tool (30), as a whole.

The device (D) includes a first stationary engine (1), which is advantageously and preferably a digitally commanded brushless servomotor, which has connected thereto, motion transmission means (3) and a second motor (2), which is likewise preferably a digitally commanded brushless servomotor, rigidly fastened to the transmission means (3) and operated by the latter so as to translate along an operation direction (L).

The second movable motor (2) drives in rotation (ω) a chuck (4), which holds the drilling tool (30).

The motion transmission means (3) include a ball screw (31), driven in rotation by the first stationary motor (1).

A nut (32), engaging with the ball screw (31), supports a plate (6), which is rigidly fastened to the body of the second motor (2).

The stationary motor (1) rotates the ball screw (31), which drives in translation the related nut (32), and consequently, the second movable motor (2), which drives in rotation ω the tool (30) by the chuck (4). Therefore, the tool (30) is driven in translation and rotation along the above mentioned operation direction (L).

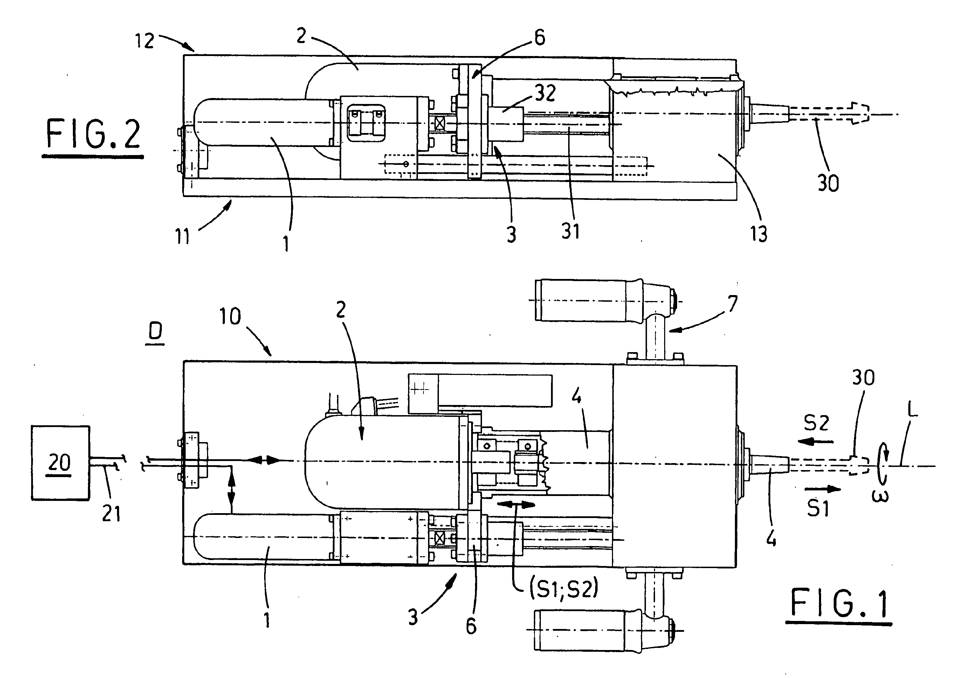

As shown for example in Figure 2, the first stationary brushless motor (1), the motion transmission means (3) and the second moving brushless motor (2) are housed inside a casing (10), which includes a base (11), supporting and fastening the first stationary brushless motor (1), a protection covering (12), fastened to the base (11) and a working head (13), which is engaged by the chuck (4) and joins with the free end of the ball screw (31) of the motion transmission means (3).

In particular, the first stationary brushless motor (1) and the second moving brushless motor (2) are situated inside the casing (10), with the respective axes parallel to each other.

Means for stabilizing the translation and for guiding the chuck (4) rotation are situated in the working head (13) of the casing (10).

The alternative translation stabilization means include bushings and the chuck rotation guiding means include oblique bearings with an adjustable slack (not shown in detail, since they are not within the scope of the present invention).

The casing 10 has a handle 7 for facilitating the gripping and holding of the casing by an operator near the material to be drilled.

The device D includes and is characterized by an electronic central unit (20) for digital processing and programming data, which is interfaced with the first stationary brushless motor (1), as well as with the second moving brushless motor (2).

The electronic central unit (20) is aimed at commanding the synchronous operation of the first stationary brushless motor (1) and the second moving brushless motor (2).

According to the enclosed figures, the electronic central unit (20) is situated out of the casing (10) and interfaced with the first stationary brushless motor (1) and with the second moving brushless motor (2) via suitable connection cables (21).

The electronic central unit (20) can be situated inside the casing (10) as well.

In particular, the electronic central unit (20) can control and change the operating mode of the second moving brushless motor (2), to adjust instantaneously the rotation speed ω of the tool (30). Furthermore, the electronic central unit (20) can control and change the operating mode of the first stationary brushless motor (1), so as to adjust instantaneously the speed, extension and direction of the translation (S1, S2) of the second moving brushless motor (2), by means of the ball screw (31), in relation to the hardness and composition of the layer of material to be drilled, as well as in relation to the depth of the hole to be drilled in the latter.

Consequently, the device (D) is capable of operating the translation the of tool (30) in a direction (S1) for an exact desired extension programmed previously, in relation to the depth of the hole to obtain, as well as of driving with constant speed, during the whole drilling operation, the forward movement and rotation ω of the tool, made at best in relation to the type (hardness) of the material to be drilled.

Further, during the drilling operation, the device (D) can control and change immediately and instantaneously the tool (30) translation direction, for example by making it moving alternately forward in a direction (S1) and then backward in a direction (S2), as well as the tool translation extension and speed, by changing and adjusting the operation mode of the ball screw (31) by command and control of the operation mode of the first stationary brushless motor (1), and it can also control and change immediately and instantaneously the tool (30) rotation speed by command and control of the operation mode of the second movable brushless motor (2).

The device (D) is extremely versatile and can be adapted each time to the particular drilling needs (number of layers to be drilled, thickness of the layers to be drilled, depth of the hole to be obtained, different hardness of the layers to be drilled, etc.)

This is possible due to the use of two digital digitally commanded brushless servomotors, and of the electronic central unit for digital processing and programming of data.

Actually, the electronic central unit (20) can be programmed in such a way, as to command the operation of the first stationary brushless motor (1) and the translation of the second movable brushless motor (2) by controlling the translation position of the nut (32) and of the second movable brushless motor (2) along the operation direction (L).

The electronic central unit (20) can be also programmed in such a way, as to command the operation of the first stationary brushless motor (1) and of the second moving brushless motor (2) by controlling the related operation torques, or by controlling the relative rotation speeds.

Further, the electronic central unit (20) can be programmed as to command the operation of the first stationary brushless motor (1) and of the second moving brushless motor (2) by a combined controlling of the relative operation torques and the relative rotation speeds.

Otherwise, the electronic central unit (20) can be programmed as to command the operation of the first stationary brushless motor (1) and of the second moving brushless motor (2) by a combined controlling of the relative operation torques and the relative positions, respectively of the nut (32) translation and of the translation of the second movable brushless motor (2) along the operation direction L.

Another way of programming the electronic central unit (20) can be as follows: a control is performed on the operation of the first stationary brushless motor (1) and of the second movable brushless motor (2) by a combined control of the relative speeds and of the relative positions, respectively of the nut (32) translation and of the translation of the second movable brushless motor (2) along the working direction (L).

According to an advantageous way of programming the electronic central unit (20), a control is performed including the control on the operation of the first stationary brushless motor (1), so as to translate alternately the second movable brushless motor (2) along the operation direction (L) in opposite translation directions, respectively in the forward direction (S1), to perform the drilling, and in the backward direction (S2), to discharge the drilling chips.

The advantages of the device (D) proposed by the present invention result evident from the above description.

It allows to obtain holes of absolutely precise depth and cross-section, in any type of material.

Moreover, it allows to control and adjust immediately and instantaneously the drilling tool rotation speed, as well as the translation direction, forward or backward.

This is particularly advantageous when the material to be drilled is composed of layers of different hardness: for each layer to be drilled, in relation to its thickness and hardness, the device is capable of operating the drilling tool at different forward movement and rotation speeds, and with translation extension suitable and best for obtaining a precise hole.

For example, in case of material composed of two layers of different hardness and thickness, setting and programming the electronic central unit (20) according to the parameters (e.g. thickness, hardness) of the layers to be drilled, the device (D) is capable of operating and commanding the drilling tool, so as to change immediately its rotation speed (by control of the operation of the second moving brushless motor), the forward movement speed and extension (by control of the operation of the first stationary brushless motor), when drilling the first layer has been completed, that is due to the movement of the tool of a stroke value equal to the thickness of the first layer.

The operation mode of the two brushless motors can be changed alternately, when the central unit perceives a change of load on the tool, caused by the change of the material hardness in the contact surface between the two different layers.

This is possible due to the sensibility of the two brushless motors, which can perceive the smallest variations of the load on the tool.

After having drilled the first layer of the material, the drilling tool reaches the contact surface with the second layer to be drilled, having different hardness, and the two brushless motors, in particular the movable motor for setting the tool in rotation, perceive immediately a change of load on the tool, and the central unit, in step relation with the change perception, commands and operates immediately the two brushless motors with new rotation speed and new forward movement speed and extension, in relation to the characteristics of the new layer of material to be drilled, stored therein previously.

The use of the digitally commanded brushless motors, compact and light, makes the device highly manageable and ensures a contained heating in relation to the power performance, whose entity is particularly indicated for the drilling requirements to be met.

Moreover, the device is particularly safe and easy to use, because the activation/deactivation buttons are advantageously situated near the handles.(7)

## Claims

1. Digital device for command and control of a tool translation and rotation, in particular a drilling tool (30), comprising a first motor (1), and a second motor (2), **characterized in that** said first motor (1) is stationary and it is a digitally commanded brushless servomotor able to perceive variations of the load on said tool, for operating motion transmission means (3), and said second motor (2) is movable and it is a digitally commanded brushless servomotor able to perceive variations of the load on said tool, rigidly connected to said motion transmission means (3) and moved, by the latter, so as to translate along an operation direction (L), to set said tool (30) in rotation (ω) by a chuck (4),
and **in that** it includes an electronic central unit (20) for digital processing and programming of data, which is interfaced with said first stationary motor (1) and to said second movable motor (2), which can command synchronously said first stationary motor (1) and said second movable motor (2) and can control and change the operation mode of the second movable motor (2), in order to adjust immediately the rotation (ω) of said tool (30), and can control and change immediately the extension, direction and speed (S1, S2) of the second movable motor (2) translation along said operation direction (L) by said motion transmission means (3), in relation to the hardness of a layer of material to be drilled by said tool (30), and to the composition of the same layer of material, as well as to the depth of the hole to be made therein;
said electronic central unit (20) being set and programmed so that to detect a variation of load on the tool caused by a change of the material hardness perceived by said first (1) and second motor (2), and consequently immediately change the operation mode of said first stationary brushless motor (1), and/or the operation mode of the second movable brushless motor (2).

2. Device as claimed in claim 1, **characterized in that** said motion transmission means (3) include a ball screw (31), set in rotation by said first stationary motor (1), which is commanded by said electronic central unit (20), with a nut (32) engaging with said ball screw (31) and supporting a plate (6), rigidly connected to the body of said second movable motor (2).

3. Device as claimed in claim 1, **characterized in that** said first stationary motor (1), said motion transmission means (3) and said second movable motor (2) are housed inside a casing (10) including a base (11), supporting and fastening said first stationary motor (1), a protection covering (12), coupled with said base (11) and a working head (13) engaged by said chuck (4) and supporting said motion transmission means (3)

4. Device as claimed in claim 3, **characterized in that** said first motor (1) and said second motor (2) are housed inside said casing (10) with respective axes being parallel to each other.

5. Device as claimed in claim 3, **characterized in that** it includes means for stabilization of the alternate translation and guiding of the rotation of said chuck (4), situated near said working head (13) of said casing (10).

6. Device as claimed in claim 5, **characterized in that** said means for stabilization of the alternate translation include bushings and that said chuck rotation .guiding means include oblique bearings with adjustable slack.

7. Device as claimed in claim 3, **characterized in that** it has a handle (7) connected to the casing (10) for facilitating the gripping and holding of the casing by an operator.

8. Device as claimed in claim 1 or in claim 2, **characterized in that** said electronic central unit (20) is programmed in such a way, as to command the operation of said first stationary motor (1) and said second movable motor (2) by controlling the translation position of the nut and of said second movable motor (2) along said operation direction (L).

9. Device, as claimed in claim 1, **characterized in that** said electronic central unit (20) is programmed in such a way, as to command the operation of the first stationary motor (1) and of the second movable motor (2) by controlling the relative operation couples.

10. Device as claimed in claim 1, **characterized in that** said electronic central unit (20) is programmed in such a way, as to command the operation of the first stationary motor (1) and of the second movable motor (2) by controlling the relative rotation speeds.

11. Device as claimed in claim 1, **characterized in that** said electronic central unit (20) is programmed in such a way, as to command the operation of the first stationary motor (1) and of the second movable motor (2) by a combined control of the relative operation torques and the relative rotation speeds.

12. Device as claimed in claim 1 or in claim 2, **characterized in that** said electronic central unit (20) is programmed in such a way, as to command the operation of said first stationary motor (1) and of said second movable motor (2) by a combined control of the relative operation torques and the relative positions, respectively of the nut of the motion transmission means (3) and of the translation of the second movable motor (2) along the working direction (L).

13. Device as claimed in claim 1 or in claim 2, **characterized in that** said electronic central unit (20) is programmed in such a way, as to command the operation of said first stationary motor (1) and of said second movable motor (2) by a combined control of the relative rotation speeds and of the relative positions, respectively of the nut of said motion transmission means (3) and of said movable motor (2) along said working line (L).

14. Device as claimed in claim 1, **characterized in that** said electronic central unit (20) is programmed in such a way, as to command the operation of said first stationary motor (1), so as to translate alternately the second movable motor (2) along the operation direction (L) in opposite translation directions, respectively in the forward direction (S1), to perform the drilling, and in the backward direction (S2), to discharge the drilling chips.

## Patentansprüche

1. Digitale Vorrichtung zur Steuerung und Regelung der Translation und Rotation eines Werkzeugs, insbesondere eines Bohrwerkzeugs (30), mit einem ersten Motor (1) und einem zweiten Motor (2), **dadurch gekennzeichnet, dass** der erste Motor (1) ortsfest und ein digital gesteuerter, bürstenloser Servomotor, der Veränderungen der Belastung an dem Werkzeug wahrnehmen kann, zur Betätigung von Bewegungsübertragungsmitteln (3) ist, und der zweite Motor (2) bewegbar und ein digital gesteuerter, bürstenloser Servomotor ist, der Veränderungen der Belastung an dem Werkzeug wahrnehmen kann, mit den Bewegungsübertragungsmitteln (3) starr verbunden ist und von den letzteren so bewegt wird, dass er translatorisch entlang einer Betätigungsrichtung (L) läuft, um das Werkzeug (30) durch ein Futter (4) in Bewegung (ω) zu setzen,
und dass er eine elektronische Zentraleinheit (20) zur digitalen Verarbeitung und Programmierung von Daten umfasst, die mit dem ersten, ortsfesten Motor (1) und dem zweiten, bewegbaren Motor (2) gekoppelt ist, den ersten, ortsfesten Motor (1) und den zweiten, bewegbaren Motor (2) synchron steuern und die Betriebsart des zweiten, bewegbaren Motor (2) regeln und ändern kann, um sofort die Rotation (ω) des Werkzeugs (30) einzustellen, und die Ausfahrbewegung, Richtung und Geschwindigkeit (S1, S2) der Translation des zweiten, bewegbaren Motors (2) entlang der Betätigungsrichtung (L) durch die Bewegungsübertragungsmittel (3) in Bezug auf die Härte einer von dem Werkzeug (30) zu bohrenden Materialschicht und auf die Zusammensetzung dieser Materialschicht sowie auf die Tiefe der in diese einzubringenden Bohrung regeln und sofort ändern kann; wobei die elektronische Zentraleinheit (20) so eingestellt und programmiert ist, dass sie eine Veränderung der Belastung an dem Werkzeug, die durch eine von dem ersten (1) und dem zweiten Motor (2) wahrgenommenen Änderung der Materialhärte bewirkt wird, detektiert und folglich sofort die Betriebsart des ersten, ortsfesten, bürstenlosen Motors (1) und/oder die Betriebsart des zweiten, bewegbaren, bürstenlosen Motors (2) ändert.

2. Vorrichtung nach Anspruch 1, **dadurch gekennzeichnet, dass** die Bewegungsübertragungsmittel (3) eine Kugelspindel (31) umfassen, die von dem ersten, ortsfesten Motor (1) in Drehung versetzt wird, der von der elektronischen Zentraleinheit (20) gesteuert wird, wobei mit der Kugelspindel (31) eine Mutter (32) in Eingriff steht und eine Platte (6) abstützt, die mit dem Körper des zweiten, bewegbaren Motors (2) starr verbunden ist.

3. Vorrichtung nach Anspruch 1, **dadurch gekennzeichnet, dass** der erste, ortsfeste Motor (1), die Bewegungsübertragungsmittel (3) und der zweite, bewegbare Motor (2) in einem Gehäuse (10) untergebracht sind, das eine Basis (11), welche den ersten, ortsfesten Motor (1) trägt und befestigt, eine Schutzabdeckung (12), die mit der Basis (11) verbunden ist, und einen Bearbeitungskopf (13) umfasst, in welchen das Futter (4) eingreift und welcher die Bewegungsübertragungsmittel (3) abstützt.

4. Vorrichtung nach Anspruch 3, **dadurch gekennzeichnet, dass** der erste Motor (1) und der zweite Motor (2) so in dem Gehäuse (10) untergebracht sind, dass die jeweiligen Achsen parallel zueinander liegen.

5. Vorrichtung nach Anspruch 3, **dadurch gekennzeichnet, dass** sie Mittel zum Stabilisieren der alternierenden Translation und Führen der Rotation des Futters (4) umfasst, die nahe dem Bearbeitungskopf (13) des Gehäuses (10) angeordnet sind.

6. Vorrichtung nach Anspruch 5, **dadurch gekennzeichnet, dass** die Mittel zum Stabilisieren der alternierenden Translation Buchsen umfassen und die Führungsmittel für die Rotation des Futters (4) Schräglager mit einstellbarem Spiel umfassen.

7. Vorrichtung nach Anspruch 3, **dadurch gekennzeichnet, dass** sie eine Handhabe (7) aufweist, die zum leichteren Ergreifen und Halten des Gehäuses durch eine Bedienungsperson mit dem Gehäuse (10) verbunden ist.

8. Vorrichtung nach Anspruch 1 oder Anspruch 2, **dadurch gekennzeichnet, dass** die elektronische Zentraleinheit (20) in einer solchen Weise programmiert ist, dass sie die Funktionsweise des ersten, ortsfesten Motors (1) und des zweiten, bewegbaren Motors (2) durch Regelung der Translationsstellung der Mutter und des zweiten, bewegbaren Motors (2) entlang der Betätigungsrichtung (L) steuert.

9. Vorrichtung nach Anspruch 1, **dadurch gekennzeichnet, dass** die elektronische Zentraleinheit (20) in einer solchen Weise programmiert ist, dass sie die Funktionsweise des ersten, ortsfesten Motors (1) und des zweiten, bewegbaren Motors (2) durch Regelung der jeweiligen Betätigungspaare steuert.

10. Vorrichtung nach Anspruch 1, **dadurch gekennzeichnet, dass** die elektronische Zentraleinheit (20) in einer solchen Weise programmiert ist, dass sie die Funktionsweise des ersten, ortsfesten Motors (1) und des zweiten, bewegbaren Motors (2) durch Regelung der jeweiligen Umdrehungsgeschwindigkeiten steuert.

11. Vorrichtung nach Anspruch 1, **dadurch gekennzeichnet, dass** die elektronische Zentraleinheit (20) in einer solchen Weise programmiert ist, dass sie die Funktionsweise des ersten, ortsfesten Motors (1) und des zweiten, bewegbaren Motors (2) durch eine kombinierte Regelung der jeweiligen Betätigungsdrehmomente und der jeweiligen Umdrehungsgeschwindigkeiten steuert.

12. Vorrichtung nach Anspruch 1 oder Anspruch 2, **dadurch gekennzeichnet, dass** die elektronische Zentraleinheit (20) in einer solchen Weise programmiert ist, dass sie die Funktionsweise des ersten, ortsfesten Motors (1) und des zweiten, bewegbaren Motors (2) durch eine kombinierte Regelung der jeweiligen Betätigungsdrehmomente bzw. der jeweiligen Positionen der Mutter der Bewegungsübertragungsmittel (3) sowie der Translation des zweiten, bewegbaren Motors (2) entlang der Bearbeitungsrichtung (L) steuert.

13. Vorrichtung nach Anspruch 1 oder Anspruch 2, **dadurch gekennzeichnet, dass** die elektronische Zentraleinheit (20) in einer solchen Weise programmiert ist, dass sie die Funktionsweise des ersten, ortsfesten Motors (1) und des zweiten, bewegbaren Motors (2) durch eine kombinierte Regelung der jeweiligen Umdrehungsgeschwindigkeiten bzw. der jeweiligen Positionen der Mutter der Bewegungsübertragungsmittel (3) sowie des zweiten, bewegbaren Motors (2) entlang der Betätigungslinie (L) steuert.

14. Vorrichtung nach Anspruch 1, **dadurch gekennzeichnet, dass** die elektronische Zentraleinheit (20) in einer solchen Weise programmiert ist, dass sie die Funktionsweise des ersten, ortsfesten Motors (1) so steuert, dass der zweite, bewegbare Motor (2) translatorisch alternierend entlang der Betätigungsrichtung (L) in einander entgegengesetzten Translationsrichtungen, in Vorwärtsrichtung (S1) zum Ausführen des Bohrvorhangs bzw. in Rückwärtsrichtung zum Abführen der Bohrspäne, bewegt wird.

## Revendications

1. Dispositif numérique pour commander et contrôler une translation et une rotation d'outil, en particulier un outil de perçage (30), comprenant un premier moteur (1), et un deuxième moteur (2), **caractérisé en ce que** ledit premier moteur (1) est fixe et il s'agit d'un servomoteur sans balai commandé numériquement capable de percevoir des variations de la charge appliquée audit outil, pour mettre en oeuvre des moyens de transmission de mouvement (3), et ledit deuxième moteur (2) est mobile et il s'agit d'un servomoteur sans balai commandé numériquement capable de percevoir des variations de la charge appliquée audit outil, relié rigidement auxdits moyens de transmission de mouvement (3) et déplacé, par les susdits, de manière à translater le long d'une direction de fonctionnement (L), pour mettre ledit outil (30) en rotation (ω) par un mandrin (4),
et **en ce qu'**il comprend une unité centrale électronique (20) pour le traitement numérique et la programmation de données, qui est interfacée avec ledit premier moteur fixe (1) et audit deuxième moteur mobile (2), qui peut commander de manière synchrone ledit premier moteur fixe (1) et ledit deuxième moteur mobile (2) et qui peut contrôler et modifier le mode de fonctionnement du deuxième moteur mobile (2), afin d'ajuster immédiatement la rotation (ω) dudit outil (30), et qui peut contrôler et modifier immédiatement la course, la direction et la vitesse (S1, S2) de translation du deuxième moteur mobile (2) le long de ladite direction de fonctionnement (L) par lesdits moyens de transmission de mouvement (3), en relation avec la dureté d'une couche de matériau à percer par ledit outil (30), et avec la composition de la susdite couche de matériau, ainsi qu'avec la profondeur du trou à réaliser dans celle-ci ;
ladite unité centrale électronique (20) étant réglée et programmée de manière à détecter une variation de la charge appliquée à l'outil provoquée par une variation de la dureté du matériau perçue par lesdits premier (1) et deuxième (2) moteurs, et en conséquence à modifier immédiatement le mode de fonctionnement dudit premier moteur sans balai fixe (1), et/ou le mode de fonctionnement du deuxième moteur sans balai mobile (2).

2. Dispositif selon la revendication 1, **caractérisé en ce que** lesdits moyens de transmission de mouvement (3) comprennent une vis à billes (31), mise en rotation par ledit premier moteur fixe (1), qui est commandé par ladite unité centrale électronique (20), un écrou (32) venant en prise avec ladite vis à billes (31) et supportant une plaque (6), reliée rigidement au corps dudit deuxième moteur mobile (2).

3. Dispositif selon la revendication 1, **caractérisé en ce que** ledit premier moteur fixe (1), lesdits moyens de transmission de mouvement (3) et ledit deuxième moteur mobile (2) sont logés à l'intérieur d'un carter (10) comprenant une base (11), supportant et attachant ledit premier moteur fixe (1), un capot de protection (12), couplé à ladite base (11) et une tête d'usinage (13) avec laquelle ledit mandrin (4) vient en prise et supportant lesdits moyens de transmission de mouvement (3).

4. Dispositif selon la revendication 3, **caractérisé en ce que** ledit premier moteur (1) et ledit deuxième moteur (2) sont logés à l'intérieur dudit carter (10) avec les axes respectifs parallèles l'un à l'autre.

5. Dispositif selon la revendication 3, **caractérisé en ce qu'**il comprend des moyens pour stabiliser la translation alternée et guider la rotation dudit mandrin (4), situés près de ladite tête d'usinage (13) dudit carter (10).

6. Dispositif selon la revendication 5, **caractérisé en ce que** lesdits moyens pour stabiliser la translation alternée comprennent des douilles, et **en ce que** lesdits moyens de guidage de rotation de mandrin comprennent des roulements obliques avec un jeu ajustable.

7. Dispositif selon la revendication 3, **caractérisé en ce qu'**il comporte une poignée (7) reliée au carter (10) pour faciliter la préhension et le maintien du carter par un opérateur.

8. Dispositif selon la revendication 1 ou la revendication 2, **caractérisé en ce que** ladite unité centrale électronique (20) est programmée de manière à commander le fonctionnement dudit premier moteur fixe (1) et dudit deuxième moteur mobile (2) en contrôlant la position de translation de l'écrou et dudit deuxième moteur mobile (2) le long de ladite direction de fonctionnement (L).

9. Dispositif, selon la revendication 1, **caractérisé en ce que** ladite unité centrale électronique (20) est programmée de manière à commander le fonctionnement du premier moteur fixe (1) et du deuxième moteur mobile (2) en contrôlant les couples de fonctionnement relatifs.

10. Dispositif selon la revendication 1, **caractérisé en ce que** ladite unité centrale électronique (20) est programmée de manière à commander le fonctionnement du premier moteur fixe (1) et du deuxième moteur mobile (2) en contrôlant les vitesses de rotation relatives.

11. Dispositif selon la revendication 1, **caractérisé en ce que** ladite unité centrale électronique (20) est programmée de manière à commander le fonctionnement du premier moteur fixe (1) et du deuxième moteur mobile (2) par un contrôle combiné des couples de fonctionnement relatifs et des vitesses de rotation relatives.

12. Dispositif selon la revendication 1 ou la revendication 2, **caractérisé en ce que** ladite unité centrale électronique (20) est programmée de manière à commander le fonctionnement dudit premier moteur fixe (1) et dudit deuxième moteur mobile (2) par un contrôle combiné des couples de fonctionnement relatifs et des positions relatives, respectivement de l'écrou des moyens de transmission de mouvement (3) et de la translation du deuxième moteur mobile (2) le long d'une direction d'usinage (L).

13. Dispositif selon la revendication 1 ou la revendication 2, **caractérisé en ce que** ladite unité centrale électronique (20) est programmée de manière à commander le fonctionnement dudit premier moteur fixe (1) et dudit deuxième moteur mobile (2) par un contrôle combiné des vitesses de rotation relatives et des positions relatives, respectivement de l'écrou desdits moyens de transmission de mouvement (3) et dudit moteur mobile (2) le long de ladite ligne d'usinage (L).

14. Dispositif selon la revendication. 1, **caractérisé en ce que** ladite unité centrale électronique (20) est programmée de manière à commander le fonctionnement dudit premier moteur fixe (1), de manière à translater en va-et-vient le deuxième moteur mobile (2) le long de la direction de fonctionnement (L) dans des directions de translation opposées, respectivement dans la direction en avant (S1), pour effectuer le perçage, et dans la direction en arrière (S2), pour décharger les copeaux de perçage.
